# EUROPÄISCHE PATENTSCHRIFT

(11) **EP 1 688 596 B1**
(45) Veröffentlichungstag und Bekanntmachung des Hinweises auf die Patenterteilung: **26.09.2007**
(21) Anmeldenummer: 06000046.0
(22) Anmeldetag: 03.01.2006
(51) Int. Cl.: F01M 13/04, B03C 3/74, F01N 3/01, H01T 19/00

(54) **Elektroabscheider mit Memory-Metall-Aktor**
Electrostatic precipitator having a memory metal actuator
Dépoussiéreur électrostatique avec actuateur en métal à mémoire de forme

(30) Priorität: 05.01.2005 DE 202005000093 U
(43) Veröffentlichungstag der Anmeldung: 09.08.2006
(73) Patentinhaber: Hengst GmbH & Co. KG, 48147 Münster (DE)
(72) Erfinder: Ahlborn, Stephan, 48308 Senden (DE); Vinkelau, Christian, 48720 Rosendahl (DE)
(74) Vertreter: Habbel, Ludwig

(56) Entgegenhaltungen:
- WO-A-02/04126
- DE-U1- 20 303 087
- US-B1- 6 348 103

## Beschreibung

Die Erfindung betrifft einen Elektroabscheider nach dem Oberbegriff des Anspruchs 1.

Aus der WO 02/04126 A1 ist ein gattungsgemäßer Elektroabscheider bekannt. Bei diesem wird die Abreinigung der Elektrode durch ein Reinigungselement dadurch bewirkt, dass ein Wachs-Dehnstoffkörper als Antriebselement für die Relativbewegung zwischen dem Reinigungselement und der abzureinigenden Elektrode Verwendung findet. Beim Start der Verbrennungskraftmaschine erwärmt sich auf Grund der Motorwärme auch das Wachs-Dehnstoffelement und dehnt sich aus. Nach Abstellen des Motors kühlt sich dieser ab, und damit auch das Wachs-Dehnstoffelement, so dass es eine erneute, nun gegenläufige Bewegung zwischen der abzureinigenden Elektrode und dem Reinigungselement bewirkt. Beispielsweise beim Einsatz in Kraftfahrzeugen, wo im Gegensatz beispielsweise zu Kraftwerken der Motor nicht über eine sehr lange Zeitdauer seine Betriebstemperatur aufweist, sondern vielmehr vergleichsweise häufig an- und abgestellt wird und somit erwärmt bzw. anschlie-ßend wieder abgekühlt wird, eine zuverlässige, vergleichsweise häufige Reinigung der abzureinigenden Elektrode sichergestellt.

Bedingt durch das Temperaturverhalten des Wachs-Dehnstoffelementes erwärmt sich dieses nur vergleichsweise langsam. Dies kann nachteilig sein: Geht man davon aus, dass die Relativbewegung zwischen Reinigungselement und Elektrode dazu führt, dass das Reinigungselement den wirksamen Bereich der Elektrode im Ruhezustand verringert bzw. abdeckt und die Elektrode demgegenüber in der Arbeitsstellung des Reinigungselementes und dementsprechend im Betriebszustand des Motors, nämlich bei Betriebstemperatur des Motors, die Elektrodenoberfläche möglichst weitgehend freigibt, so bedeutet dieses verzögerte Ansprechen des Antriebselementes, das während des Betriebs der Verbrennungskraftmaschine die Reinigungswirkung des Elektroabscheiders nicht in dem gewünschten Maße sichergestellt werden kann. Der Abscheidegrad des Elektroabscheiders nimmt dementsprechend nur vergleichsweise langsam zu, bis der Elektroabscheider seine, bezogen auf die Umgebungstemperatur des Wachs-Dehnstoffelements, endgültige Arbeitsstellung eingenommen hat, also das Reinigungselement in eine Stellung bewegt worden ist, in welcher die wirksame Elektrodenoberfläche sich temperaturabhängig möglichst groß einstellt und möglichst hohe Abscheideleistungen des Elektroabscheiders ermöglicht.

Weiterhin sind vergleichsweise starke Rückstellkräfte erforderlich. Diese müssen einerseits über das Bauteil abgefangen werden und erfordern weiterhin vergleichsweise starke Rückstellmittel.

Das Wachs-Dehnstoffelement fährt über die konstruktiv vorgesehene Temperatur hinausgehend auch noch weiter aus, dehnt sich also noch weiter, wenn beispielsweise Temperaturen erreicht werden, die über der konstruktiv vorgesehenen Arbeitstemperatur liegen. Dies erfordert einen gewissen konstruktiven Aufwand, um den so genannten "Überhub" des Antriebselementes zu berücksichtigen und Beschädigungen innerhalb des Elektroabscheiders durch diesen Überhub zu vermeiden.

Der Erfindung liegt die Aufgabe zugrunde, einen gattungsgemäßen Elektroabscheider dahingehend zu verbessern, dass dieser eine vereinfachte Konstruktion aufweist, die zudem leichtgewichtiger und preisgünstiger herstellbar ist und die eine möglichst präzise Anpassung der Relativbewegung an die konstruktiv gewünschten Gegebenheiten ermöglicht.

Diese Aufgabe wird durch einen Elektroabscheider mit den Merkmalen des Anspruchs 1 gelöst.

Die Erfindung schlägt mit anderen Worten vor, bei dem Antriebselement die Auslösung der Relativbewegung mittels eines so genannten "Memory-Metalls" zu verwirklichen. Als Memory-Metalle sind Metalllegierungen bezeichnet, welche temperaturabhängig unterschiedliche Formgebungen einnehmen können. Dabei ist für die erfindungsgemäß vorgeschlagene Metalllegierung typisch, dass die Formänderung nicht, wie dies ansonsten von temperaturabhängigen Werkstoffeigenschaften bekannt ist, temperaturabhängig mit einem etwa konstanten Dehnungs- bzw. Schrumpfungsfaktor erfolgt, sondern dass vielmehr bei Erreichen bestimmter Temperaturschwellwerte die Formänderung in einem unproportional starkem Ausmaß erfolgt.

Als eine derartige Formänderung wird im Sinne des vorliegenden Vorschlages nicht nur die Änderung einer grundsätzlichen geometrischen Form verstanden, beispielsweise, indem sich ein aus diesem Metall bestehendes, etwa C-förmiges Bauelement temperaturabhängig entweder weiter schließt, nahezu zu einem geschlossenen Kreis, oder im Gegensatz dazu aus der zunächst C-förmigen Anordnung in eine nahezu geradlinige Form verformt, sondern es werden beispielsweise Längenänderungen als derartige Änderung der Formgebung aufgefasst.

Besonders vorteilhaft können Metalllegierungen eingesetzt werden, die Nickel und Titan enthalten, beispielsweise insbesondere die als "Nitinol" handelsübliche Metalllegierung, welche den Vorteil aufweist, innerhalb eines vergleichsweise scharf begrenzten Temperaturbereichs die gewünschte Formänderung auszuführen. Die dabei frei werdenden Kräfte ermöglichen die Bewegung von Bauteilen mit einem vergleichsweise kleinen und leichtgewichtigen Antriebselement dadurch, dass zur Erwärmung dieses kleinen und leichtgewichtigen Antriebselementes nur vergleichsweise wenig Wärmeenergie erforderlich ist und die Formänderung vergleichsweise schlagartig erfolgt, wird es dem Konstrukteur des Elektroabscheiders ermöglicht, konstruktiv sehr präzise einen bestimmten Betriebszustand zu definieren, bei welchem die Relativbewegung erfolgen soll. Da diese Relativbewegung schnell erfolgt, wird dementsprechend bei Start des Verbrennungsmotors schnell die optimal große, wirksame Oberfläche der Elektrode einsatzbereit, so dass der Elektroabscheider möglichst frühzeitig optimale Abscheideergebnisse ermöglicht.

Da die wesentliche Formänderung, abgesehen von einem vergleichsweise geringen temperaturabhängigen Dehnungs- bzw. Kontraktionsverhalten bei einer bestimmten Temperatur bzw. innerhalb eines bestimmten Temperaturfensters erfolgt, wird ein Überhub in nur sehr geringem Maße bewirkt, so dass dementsprechend der konstruktive Aufwand zur Berücksichtigung dieses Überhubs minimiert oder sogar vernachlässigt werden kann. Das erwähnte Temperaturfenster bzw. der erwähnte Temperaturschwellwert, bei welchem die Formänderung auftritt, kann in Anpassung an die konstruktiv gewünschten Gegebenheiten auf einfache Weise ausgewählt werden, da hierzu für verschiedene Temperaturbereiche verschiedene Metalllegierungen handelsüblich sind.

Vorteilhaft kann das Antriebselement auf die zu reinigende Elektrode einwirken, so dass die Relativbewegung dadurch erfolgt, dass die Elektrode selbst bewegt wird, also an dem Reinigungselement entlang bewegt wird. Dies kann je nach Ausgestaltung des Elektroabscheiders eine konstruktive Vereinfachung darstellen, da nicht in dem zwischen den beiden Elektroden vorhandenen Zwischenraum ein Reinigungselement beweglich gelagert und angetrieben werden muss, sondern vielmehr die Anordnung des Antriebselementes in einem besser zugänglichen Bereich des Elektroabscheiders vorgesehen sein kann.

Insbesondere kann in einem derartigen Fall, dass die Elektrode selbst durch das Antriebselement bewegt wird, die elektrische Kontaktierung der Elektrode mittels des Antriebselementes erfolgen. Durch die Verwendung eines elektrisch leitfähigen Antriebselementes, nämlich der vorgeschlagenen Metalllegierung, kann die elektrische Kontaktierung der Elektrode erfolgen, wobei im Rahmen des vorliegenden Vorschlags als "Kontaktierung" nicht nur die Möglichkeit vorgesehen ist, dass das Antriebselement unmittelbar die Elektrode berührt, sondern auch dann, wenn überhaupt die zur Elektrode fließende bzw. von der Elektrode abfließende elektrische Energie durch das Abreinigungselement fließt, erfolgt im Sinne des vorliegenden Vorschlags die Kontaktierung der Elektrode mittels des Antriebselementes. Auf diese Weise können Bauteile eingespart werden im Vergleich zur Verwendung eines Wachs-Dehnstoffetementes, da nicht separat zum Antriebselement eine elektrische Zuleitung erfolgen muss, die gegebenenfalls auch noch eine eigene Isolierung erfordert. Durch die sehr geringen fließenden Ströme, die dabei durch das Antriebselement in die Elektrode geführt werden, kann die zusätzliche Erwärmung des Antriebselements aufgrund der entsehenden elektrischen Verlustwärme in der Regel vernachlässigt werden.

Vorteilhaft kann eine konstruktive Ausgestaltung des Elektroabscheiders vorgesehen sein, bei welcher die Sprühelektrode ein Hüllrohr aufweist sowie eine Spitze, die einen erheblich geringeren Durchmesser aufweist als das Hüllrohr und die sich über das freie Ende des Hüllrohrs hinaus erstreckt.

Gegebenenfalls kann das Hüllrohr einen Grundkörper der Sprühelektrode bilden, selbst als Elektrodenteil wirken, während die Spitze einen die Ausbildung der Korona bildenden Teil der Sprühelektrode darstellt. In diesem Fall kann das Antriebselement als Expansionselement ausgestaltet sein, während bei kaltem Verbrennungsmotor seine Ruhestellung einnimmt, in welcher die Spitze in das Hüllrohr eingezogen ist. Bei Erwärmung des Verbrennungsmotors und Überschreitung des vorgesehenen Temperaturschwellwertes expandiert das Antriebselement und schiebt die Spitze der Sprühelektrode aus dem Hüllrohr dadurch, dass das Reinigungselement am Hüllrohr befestigt ist, wird durch die Bewegung der Spitze die gewünschte Relativbewegung bewirkt und die Spitze der Sprühelektrode abgereinigt.

Alternativ dazu kann das Antriebselement als Kontraktionselement ausgestaltet sein, welches bei kaltem Verbrennungsmotor eine vergleichsweise größere Länge aufweist und bei Überschreitung des Temperaturschwellwertes sich zusammenzieht. In diesem Fall kann das Hüllrohr als zusätzliches Bauteil ausgestaltet sein, welches nicht gleichzeitig auch den Grundkörper der Sprühelektrode bildet, sondern welches vielmehr die Spitze der Sprühelektrode großteils abdeckt. Erst bei Überschreitung der vorgesehenen Arbeitstemperatur, wenn das Reinigungselement von seiner Ruhestellung in eine Arbeitsstellung verfahren wird, zieht sich das Antriebselement zusammen und zieht das Hüllrohr über die Spitze der Sprühelektrode zum Grundkörper der Sprühelektrode hin, so dass die Spitze freigelegt wird und nicht mehr von dem Hüllrohr großenteils verdeckt wird. Wie bereits erwähnt, befindet sich das Reinigungselement am Hüllrohr und zwar indem es eine Öffnung des Hüllrohrs zumindest teilweise verdeckt, wobei sich die Spitze durch diese Öffnung erstreckt. Bei einer Relativbewegung streckt. Bei einer Relativbewegung zwischen Spitze und Hüllrohr erfolgt daher zwangsläufig die Abreinigung der Spitze.

Das Reinigungselement kann in preisgünstiger und ausreichend wirksamer Weise als Elastomerplättchen ausgestaltet sein. Dabei kann vorgesehen sein, dass dieses Elastomerplättchen ein Loch aufweist, durch welches sich die Spitze der Sprühelektrode erstreckt. In besonders preisgünstiger Ausgestaltung kann jedoch vorgesehen sein, dass das Elastomerplättchen ohne ein derartiges Loch, als einfaches aus einer größeren Fläche ausgestanztes Plättchen hergestellt und bei der Montage des Elektroabscheiders verwendet wird. Bei der erstmaligen Inbetriebnahme wird daher die Spitze der Sprühelektrode das Elastomerplättchen durchstechen und somit, völlig unabhängig von eventuellen Montagetoleranzen, das Loch jeweils an der erforderlichen Stelle im Elastomerplättchen schaffen, um die Relativbewegung zwischen dem Reinigungselement in Form des Elastomerplättchens und der Spitze zu ermöglichen.

Vorteilhaft kann eine Rückholfeder vorgesehen sein, welche bei Unterschreitung des Temperaturschwellwertes die Bewegung unterstützt, welche das Reinigungselement aus seiner Arbeitsstellung in seine Ruhestellung zurückführt. Auf diese Weise sind Antriebselemente problemlos verwendbar, bei denen entweder auf Grund der stofflichen Materialeigenschaften oder auf Grund der Formgebung des Antriebselementes die Stellkräfte zwar ausreichend groß sind, um das Reinigungselement von seiner Ruhestellung in seine Arbeitsstellung zu bewegen, bei welcher die vom Antriebselement selbst aufgebrachten Rückstellkräfte jedoch möglicherweise nicht ausreichend wären, um bei anschließender Unterschreitung des Temperaturschwellwertes zuverlässig sicherzustellen, dass das Reinigungselement aus seiner Arbeitstellung in seine Ruhestellung zurückkehrt.

Ausführungsbeispiele der Erfindung werden anhand der Zeichnungen nachfolgend näher erläutert. Dabei zeigt
- Fig. 1: eine Ansicht auf ein erstes Ausführungsbeispiel eines Elektroabscheiders, die
- Fig. 2 und 3: Längsschnitte durch den Elektroabscheider von Fig. 1 in unterschiedlichen Betriebszuständen des Elektroabscheiders, die
- Fig. 4 und 5: Längsschnitte durch ein zweites Ausführungsbeispiel eines Elektroabscheiders in unterschiedlichen Betriebszuständen, und die
- Fig. 6 und 7: Längsschnitte durch ein drittes Ausführungsbeispiel eines Elektroabscheiders in unterschiedlichen Betriebszuständen.

In den Zeichnungen ist jeweils mit 1 insgesamt ein Elektroabscheider bezeichnet, der in einen Gasströmungskanal eines Verbrennungsmotors einsetzbar ist, wobei dieser Gasströmungskanal zur Entlüftung des Kurbelgehäuses dient und der Elektroabscheider 1 Ölpartikel aus dem Gasstrom abscheiden soll.

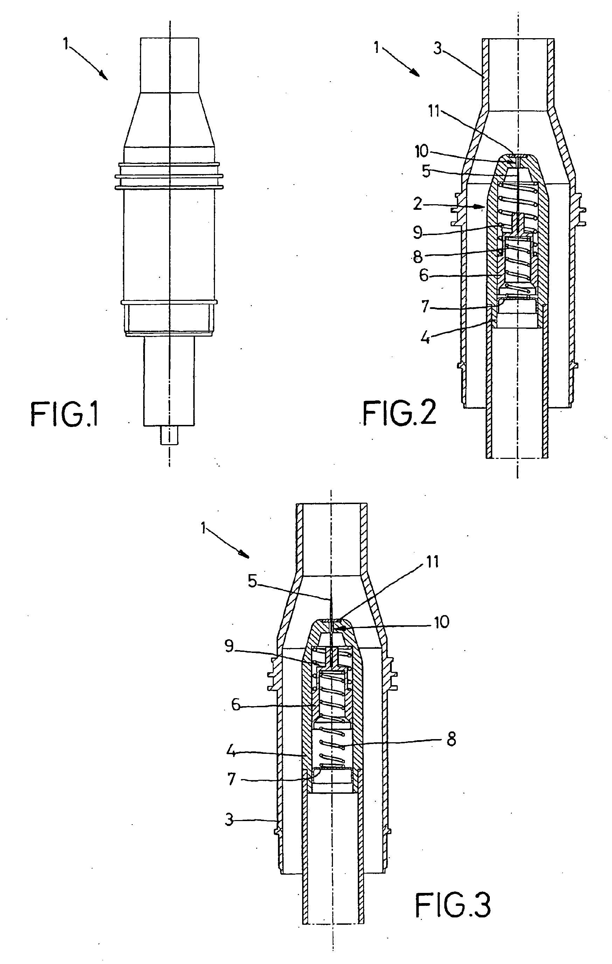

Fig. 2 zeigt einen Längsschnitt durch den Elektroabscheider 1, wobei sich der Elektroabscheider 1 in seinem Ruhezustand befindet. Der Elektroabscheider 1 weist eine Sprühelektrode 2 und eine Niederschlagselektrode 3 auf. Die Sprühelektrode 2 besteht ihrerseits aus einem Hüllrohr 4 und einer nadelförmigen Spitze 5. Die Spitze 5 ist in einem Halter 6 befestigt, welcher innerhalb des Hüllrohrs 4 längsbeweglich gelagert ist. Eine Basisplatte 7 ist in das Hüllrohr 4 eingesetzt und ortsfest verankert, beispielsweise durch Klemmung, Verklebung oder dergleichen. Ein Antriebselement 8 in Form einer Wendelfeder aus dem Werkstoff Nitinol stützt sich an der Basisplatte 7 ab und liegt dem Halter 6 an, wobei der Halter 6 hohl ausgestaltet ist und somit eine Führung für das Antriebselement 8 schafft. Weiterhin ist eine Rückholfeder 9 zwischen dem Halter 6 und dem vorderen, freien Ende des Hüllrohrs 4 vorgesehen.

Bei dem dargestellten Betriebszustand befindet sich der Elektroabscheider 1 in seinem Ruhezustand, auch das Antriebselement 8 befindet sich in seinem Ruhezustand. Es ist als Expansionselement ausgestaltet und befindet sich bei vergleichsweise niedrigen Temperaturen in seinem dargestellten Ruhezustand, in welchem es eine vergleichsweise geringe Länge entlang der Längsachse des Elektroabscheiders 1 aufweist. Die Spitze 5 befindet sich vollständig innerhalb des Hüllrohrs 4.

Überschreitet die Temperatur im Elektroabscheider 1 einen vorgegebenen Temperaturschwellwert, so ändert sich die Formgebung des Antriebselementes 8 und dieses expandiert zu einer größeren Länge, wie aus Fig. 3 ersichtlich ist. Durch diese Längenausdehnung des Antriebselementes 8 wird der Halter 6 mitsamt der Spitze 5 zum freien Ende des Hüllrohrs-4 bewegt. Dabei wird einerseits die Rückholfeder 9 komprimiert und andererseits wird dabei die Spitze 5 durch eine Öffnung 10 im Hüllrohr 4 bewegt. Diese Öffnung 10 ist durch ein Elastomerplättchen verschlossen, welches als Reinigungselement 11 dient.

Fig. 3 zeigt die Arbeitsstellung des Elektroabscheiders 1 und des Antriebselementes 8, in welcher das Antriebselement 8 expandiert ist. Bei Unterschreitung eines bestimmten Temperaturschwellwertes zieht sich das Antriebselement 8 wieder zusammen und nimmt seine aus Fig. 2 ersichtliche Ruhestellung ein. Um dabei die zuverlässige Rückführung des Halters 6 mit der Spitze 5 sicherzustellen und während dieser Rückführung eine erneute Abreinigung der Spitze 5 am Reinigungselement 11 sicherzustellen, dient die Rückholfeder 9 zur Unterstützung dieser Rückbewegung und drückt den Halter 6, an dem Antriebselement 8 anliegend, in Richtung der Basisplatte 7.

Da das Antriebselement 8 aus elektrisch leitfähigem Material besteht, kann die elektrische Kontaktierung des Halters 6 und damit der Spitze 5 über das Antriebselement 8 erfolgen.

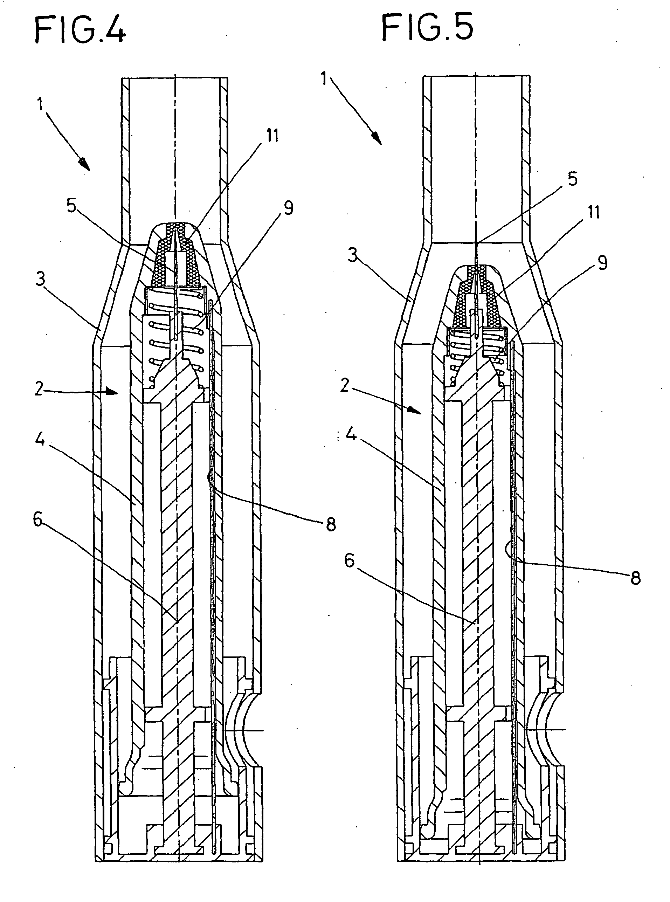

Die Fig. 4 und 5 zeigen ein zweites Ausführungsbeispiel eines Elektroabscheiders 1, wobei Fig. 4 den Ruhezustand und Fig. 5 den Betriebszustand des Elektroabscheiders 1 darstellt. Das Antriebselement 8 ist bei diesem Ausführungsbeispiel als geradliniger Nitinol-Draht ausgestaltet, wobei rein beispielhaft ein einziges Antriebselement 8 vorgesehen ist. Abweichend von dem dargestellten Ausführungsbeispiel kann jedoch vorgesehen sein, zwei oder mehr Antriebselemente 8 umfangsmäßig innerhalb der Sprühelektrode 2 anzuordnen, so dass einerseits die durch das Antriebselement 8 auftretenden Kräfte umfangsmäßig verteilt sind und Kippbewegungen bzw. Klemmungen vermieden werden, und so dass vergleichsweise schwach wirkende einzelne Drähte verwendet werden können, deren Stellkräfte sich addieren.

Die Spitze 5 der Sprühelektrode 2 ist bei diesem Ausführungsbeispiel in einem fest montierten Halter 6 gelagert, an welchem sich ein Hüllrohr 4 über eine Rückholfeder 9 abstützt. Das Hüllrohr 4 ist axial beweglich gelagert und befindet sich in Fig. 4 in einer die Spitze 5 umgebenden und abdeckenden Stellung.

Das Antriebselement 8 ist im Gegensatz zu dem ersten Ausführungsbeispiel nicht als Expansionselement, sondern als Kontraktionselement ausgestaltet. Wenn sich die Verbrennungskraftmaschine bzw. der Elektroabscheider erwärmt und das Antriebselement 8 den für seine Umformung wirksamen Temperaturschwellwert erreicht, zieht es sich zusammen und zieht dabei gegen den Widerstand der Rückholfeder 9 das Hüllrohr 4 in die in Fig. 5 dargestellte Arbeitsstellung, in welcher das Hüllrohr 4 weiter auf den Halter 6 gezogen wird, so dass die Spitze 5 der Sprühelektrode 2 aus dem Hüllrohr 4 herausragt. Dabei streift ein Reinigungselement 11, welches als im Hüllrohr 4 angeordneter Elastomer-Einsatz ausgestaltet ist, an der Spitze 5 entlang und reinigt dort anhaftende Verunreinigungen ab.

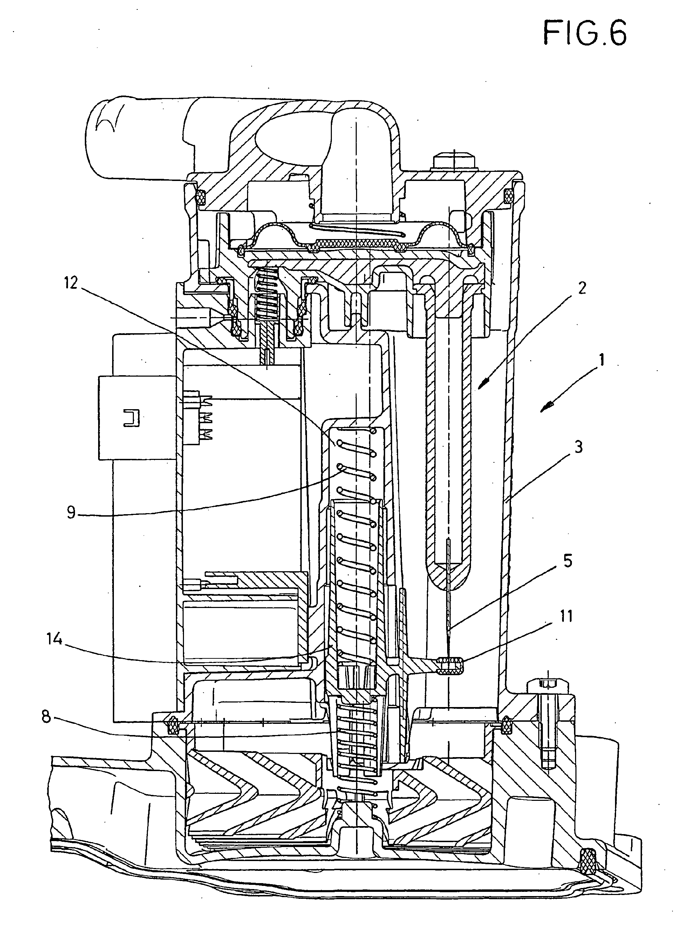

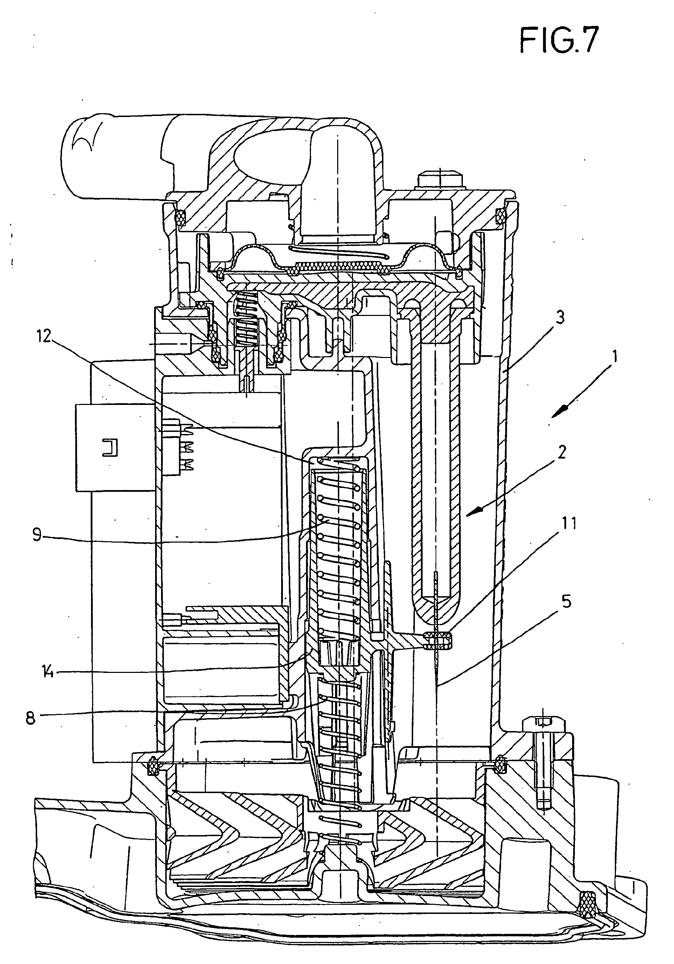

Die Fig. 6 und 7 zeigen ein drittes Ausführungsbeispiel eines Elektroabscheiders 1, wobei hier der Antrieb für das Reinigungselement 11 außerhalb der Niederschlagselektrode 3 vorgesehen ist: Neben der Niederschlagselektrode 3 ist eine Kammer 12 vorgesehen, in der sowohl das Antriebselement 8 als auch die Rückholfeder 9 angeordnet sind, wobei beide in Form von Wendelfedern ausgestaltet sind und innerhalb eines im Wesentlichen rohrförmigen Führungskörpers 14 angeordnet sind. Das Antriebselement 8 ist als Expansionselement ausgestaltet und komprimiert die als Druckfeder ausgestaltete Rückholfeder 9, wenn das Antriebselement 8 aus seiner in Fig. 6 dargestellten Ruhestellung in seine in Fig. 7 ersichtliche Arbeitsstellung expandiert. Dabei fährt das Reinigungselement 11, welches als Elastomerelement ausgestaltet ist, an der Spitze 5 der Sprühelektrode 2 entlang.

Bei entsprechend zugfester Anbindung der Rückholfeder 9 sowie des Antriebselementes 8 kann auch die Anordnung dieser beiden Elemente im Gegensatz zum Ausführungsbeispiel der Fig. 6 und 7 umgekehrt werden, so dass das Antriebselement 8 als Kontraktionselement wirkt.

## Patentansprüche

1. Elektroabscheider (1) für eine Verbrennungskraftmaschine, mit
■ einer Sprühelektrode (2),
■ einer Niederschlagselektrode (3),
■ und einem Reinigungselement (11), mit Relativbewegung zu einer der beiden Elektroden (2, 3), und welches durch die Relativbewegung eine Reinigung der Spitze (5) der Sprühelektrode (2) bewirkt,
wobei
■ als Antrieb für die Relativbewegung ein temperaturabhängig verformbares Antriebselement (8) vorgesehen ist,
■ das Antriebselement (8) bei einer ersten, vergleichsweise niedrigeren Temperatur eine erste Formgebung aufweist, in welcher es eine Ruhestellung einnimmt,
■ und das Antriebselement (8) bei einer zweiten, vergleichsweise höheren Temperatur eine zweite Formgebung einnimmt und sich in einer Arbeitsstellung befindet,
**dadurch gekennzeichnet,**
**dass** das Antriebselement (8) eine Metalllegierung aufweist, welche temperaturabhängig unterschiedliche Formgebungen einnimmt.

2. Elektroabscheider nach Anspruch 1,
**dadurch gekennzeichnet, dass** die Metalllegierung Nickel und Titan enthält.

3. Elektroabscheider nach Anspruch 2,
**dadurch gekennzeichnet, dass** die Metalllegierung aus einem als "Nitinol" handelsüblichen Werkstoff besteht.

4. Elektroabscheider nach einem der vorhergehenden Ansprüche, **dadurch gekennzeichnet,**
**dass** das Antriebselement (8) auf die zu reinigende Sprühelektrode (2) einwirkt, derart, dass die Sprühelektrode (2) an dem Reinigungselement (8) entlang bewegt wird.

5. Elektroabscheider nach Anspruch 4,
**dadurch gekennzeichnet, dass** die elektrische Kontaktierung der Sprühelektrode (2) mittels des Antriebselementes (8) erfolgt.

6. Elektroabscheider nach einem der vorhergehenden Ansprüche, **dadurch gekennzeichnet,**
**dass** die Sprühelektrode (2) ein Hüllrohr (4) sowie eine über das Hüllrohr (4) hinausragende nadelartige Spitze (5) aufweist.

7. Elektroabscheider nach den Ansprüchen 4 und 6,
**dadurch gekennzeichnet, dass** das Antriebselement (8) als Expansionselement ausgestaltet ist, welches aus der Ruhestellung, in welcher es eine erste Länge aufweist und in welcher die Spitze (5) zumindest teilweise innerhalb des Hüllrohrs (4) angeordnet ist, bei ansteigender Temperatur in eine Arbeitsstellung expandierbar ist, in welcher die Spitze (5) weiter über das Hüllrohr (4) hinausragt als in der Ruhestellung und in welcher das Antriebselement (8) eine zweite, größere Länge aufweist.

8. Elektroabscheider nach Anspruch 6,
**dadurch gekennzeichnet, dass** das Antriebselement (8) als Kontraktionselement ausgestaltet ist, welches aus einer Ruhestellung mit vergleichsweise größerer Länge bei Temperaturanstieg in eine Arbeitsstellung mit vergleichsweise kleinerer Länge kontraktierbar ist,
wobei das Antriebselement (8) auf das Hüllrohr (4) einwirkt, derart, dass das Hüllrohr (4) in der Ruhestellung die Spitze (5) wenigstens großteils überdeckt und in der Arbeitsstellung die Spitze (5) in einem demgegenüber größeren Maße freigibt.

9. Elektroabscheider nach Anspruch 7 oder 8,
**gekennzeichnet durch** eine Öffnung (10) in dem Hüllrohr (4), **durch** welche sich die Spitze (5) erstreckt, wobei das Reinigungselement (11) die Öffnung (10) zumindest teilweise verdeckt.

10. Elektroabscheider nach Anspruch 9,
**dadurch gekennzeichnet, dass** das Reinigungselement (10) als Elastomerplättchen ausgestaltet ist.

11. Elektroabscheider nach einem der vorhergehenden Ansprüche, **gekennzeichnet durch** eine Rückholfeder (9), gegen deren Wirkung das Antriebselement (8) die Relativbewegung bei Temperaturanstieg in einer ersten Richtung ausführt,
und welche bei anschließendem Temperaturabfall eine Relativbewegung in Gegenrichtung unterstützt.

12. Elektroabscheider nach einem der vorhergehenden Ansprüche, **dadurch gekennzeichnet, dass** der Elektroabscheider (1) als Ölnebelabscheider in der Kurbelgehäuseentlüftung einer Verbrennungskraftmaschine ausgestaltet ist.

## Claims

1. Electrostatic precipitator (1) for an internal combustion engine, having
■ a discharge electrode (2),
■ a collector electrode (3)
■ and a cleaning element, (11), which moves relative to one of the two electrodes (2, 3) and which element through the relative movement causes the tip (5) of the discharge electrode (2) to be cleaned,
where
■ a temperature-dependently shapable drive element (8) is provided to drive the relative movement,
■ at an initial, relatively low temperature the drive element (8) takes on a shape in which it takes up a rest position,
■ and at a second, relatively higher temperature the drive element (8) takes on a second shape and takes up a working position,
**characterised in that**
the drive element (8) incorporates a metal alloy which takes on different shapes according to temperature.

2. Electrostatic precipitator in accordance with claim 1,
**characterised in that** the metal alloy contains nickel and titanium.

3. Electrostatic precipitator in accordance with claim 2,
**characterised in that** the metal alloy consists of a material commercially available as "Nitinol".

4. Electrostatic precipitator in accordance with any of the foregoing claims,
**characterised in that** the drive element (8) acts in such a way on the discharge electrode (2) to be cleaned that the discharge electrode (2) is moved along the cleaning element (8).

5. Electrostatic precipitator in accordance with claim 4,
**characterised in that** the discharge electrode (2) is electrically contacted by means of the drive element (8).

6. Electrostatic precipitator in accordance with any of the foregoing claims,
**characterised in that** the discharge electrode (2) incorporates a cover tube (4) and a needle-like tip (5) projecting beyond the cover tube (4).

7. Electrostatic precipitator in accordance with claims 4 and 6,
**characterised in that** the drive element (8) is constructed as an expansion element which at a rising temperature can be expanded from the rest position in which it has an initial length and in which at least part of the tip (5) is arranged within the cover tube (4) into a working position in which the tip (5) projects from the cover tube (4) further than in the rest position and in which the drive element (8) has a second, larger length.

8. Electrostatic precipitator in accordance with claim 6,
**characterised in that** the drive element (8) is designed as a contraction element which at a rise in temperature can be contracted from a rest position with a relatively greater length into a working position with a relatively shorter length,
where the drive element (8) acts on the cover tube (4) in such a way that in the rest position the cover tube (4) covers at least most of the tip (5) and in the work position releases most of the tip (5) relative to it.

9. Electrostatic precipitator in accordance with claim 7 or 8,
**characterised by** a hole (10) in the cover tube (4), through which the tip (5) extends, where the cleaning element (11) at least partly covers the hole (10).

10. Electrostatic precipitator in accordance with claim 9,
**characterised in that** the cleaning element (10) is constructed as an elastomer plate.

11. Electrostatic precipitator in accordance with any of the foregoing claims,
**characterised by** a return spring (9) against the action of which at a temperature rise the drive element (8) carries out the relative movement in one direction
and which at a subsequent temperature fall assists a relative movement in the opposite direction.

12. Electrostatic precipitator in accordance with any of the foregoing claims,
**characterised in that** the electrostatic precipitator (1) is constructed as an oil mist separator in the crankcase venting system of an internal combustion engine.

## Revendications

1. Dépoussiéreur électrostatique (1) pour une machine à combustion interne, comprenant
• Une électrode de pulvérisation (2),
• Une électrode de précipitation (3) et
• Un élément de nettoyage (11) avec mouvement relatif par rapport à l'une des deux électrodes (2, 3), et qui du fait du mouvement relatif provoque un nettoyage de la pointe (5) de l'électrode de pulvérisation (2), sachant que
• Un élément d'entraînement (8) déformable en fonction de la température a été prévu comme moyen d'entraînement générateur du mouvement relatif,
• L'élément d'entraînement (8) acquiert, à une première température comparativement basse, une première géométrie dans laquelle il se trouve en position de repos,
• L'élément d'entraînement (8) acquiert, à une deuxième température comparativement plus élevée, une deuxième géométrie et se trouve dans une position de travail,
**caractérisé en ce que**
l'élément d'entraînement (8) présente un alliage métallique susceptible de prendre différentes géométries en fonction de la température.

2. Dépoussiéreur électrostatique selon la revendication 1, **caractérisé en ce que** l'alliage métallique contient du nickel et du titane.

3. Dépoussiéreur électrostatique selon la revendication 2, **caractérisé en ce que** l'alliage métallique se compose d'un matériau habituellement vendu dans le commerce sous le nom de "Nitinol".

4. Dépoussiéreur électrostatique selon l'une des revendications précédentes, **caractérisé en ce que** l'élément d'entraînement (8) agit sur l'électrode de pulvérisation (2) à nettoyer, de telle sorte que l'électrode de pulvérisation (2) se déplace le long de l'élément de nettoyage (8).

5. Dépoussiéreur électrostatique selon la revendication 4, **caractérisé en ce que** le contact électrique de l'électrode de pulvérisation (2) s'établit au moyen de l'élément d'entraînement (8).

6. Dépoussiéreur électrostatique selon l'une des revendications précédentes, **caractérisé en ce que** l'électrode de pulvérisation (2) présente un tube enveloppant (4) ainsi qu'une pointe (5) en forme d'aiguille faisant saillie au-dessus du tube enveloppant (4).

7. Dépoussiéreur électrostatique selon les revendications 4 et 6, **caractérisé en ce que** l'élément d'entraînement (8) est configuré en élément d'expansion qui - partant de la position de repos dans laquelle il présente une première longueur et dans laquelle la pointe (5) est agencée au moins en partie à l'intérieur du tube enveloppant (4) - subit une expansion au fur et à mesure que la température augmente et gagne une position de travail dans laquelle la pointe (5) fait saillie plus loin au-dessus du tube enveloppant (4) qu'en position de repos, position de travail dans laquelle l'élément d'entraînement (8) présente une deuxième longueur, plus grande.

8. Dépoussiéreur électrostatique selon la revendication 6, **caractérisé en ce que** l'élément d'entraînement (8) est configuré en élément de contraction qui - partant d'une position de repos dans laquelle il présente une longueur comparativement assez élevée - se contracte au fur et à mesure que la température augmente et gagne une position de travail dans laquelle il présente une longueur comparativement moins élevée,
sachant que l'élément d'entraînement (8) agit sur le tube enveloppant (4) de telle sorte que le tube enveloppant (4) recouvre, lorsque en position de repos, au moins la majeure partie de la pointe (5) et, lorsque en position de travail, dégage la pointe (5) à un point assez important comparé à la position de repos.

9. Dépoussiéreur électrostatique selon la revendication 7 ou 8, **caractérisé par** un orifice (10) dans le tube enveloppant (4), par lequel s'étend la pointe (5), sachant que l'élément de nettoyage (11) recouvre l'orifice (10) au moins en partie.

10. Dépoussiéreur selon la revendication 9,
**caractérisé en ce que** l'élément de nettoyage (10) est configuré sous forme de plaquette en élastomère.

11. Dépoussiéreur électrostatique selon l'une des revendications précédentes, **caractérisé par** un ressort de rappel (9) dont l'élément d'entraînement (8) surmonte l'effet pour exécuter le mouvement relatif dans une première direction lorsque la température monte, ce ressort facilitant un mouvement relatif dans la direction opposée lorsque, ensuite, la température redescend.

12. Séparateur selon l'une des revendications précédentes, **caractérisé en ce que** le dépoussiéreur électrostatique (1) est configuré sous forme de séparateur de brouillard d'huile dans le système de dégazage équipant le carter de vilebrequin d'une machine à combustion interne.
